# EUROPEAN PATENT SPECIFICATION

(11) **EP 4 608 138 B1**
(45) Date of publication and mention of the grant of the patent: **01.07.2026**
(21) Application number: 23805110.6
(22) Date of filing: 30.10.2023
(51) Int. Cl.: A01N 31/02, A01N 31/08, A01N 37/44, A22C 29/02, A23B 4/18, A23B 4/20, A23L 17/40

(54) **COMPOSITIONS AND METHODS FOR THE PREVENTION OF MELANOSIS**
ZUSAMMENSETZUNGEN UND VERFAHREN ZUR PRÄVENTION VON MELANOSE
COMPOSITIONS ET PROCÉDÉS POUR LA PRÉVENTION DE LA MÉLANOSE

(30) Priority: 28.10.2022 GB 202216030
(43) Date of publication of application: 03.09.2025
(73) Proprietor: Xyrex Ltd, Glasgow, Strathclyde G4 9SQ (GB)
(72) Inventor: MCGUIRE, Gerald, Glasgow Strathclyde G4 9SQ (GB)
(74) Representative: Murgitroyd & Company
(86) International application number: PCT/GB2023/052826
(87) International publication number: WO 2024/089441

(56) References cited:
- WO-A1-2011/077146

## Description

### Field of the Invention

The present invention relates to a solution suitable for use in the prevention of melanosis in prawns and the like, a concentrate of the solution and a method of using either the solution or the concentrate in the prevention of melanosis in prawns.

### Background of the Invention

Melanosis in prawns and the like (such as white shrimp (*Litopenaeus vannamei*), giant tiger prawn /Asian tiger shrimp/ black tiger shrimp (*Peneus monodon*) and other shrimp species) is a dark pigmentation that forms on prawn and the like within a few hours of harvest due to the oxidation of diphenones into quinones. Whilst this pigmentation is believed to be relatively harmless, it reduces the quality and commercial value of the prawns etc. - a major problem for the seafood industry.

Surface discolouration resulting from the following series of biochemical reactions can occur if prawn and the like are kept out of water. In the presence of oxygen, phenoloxidase (PO) enzymes, such as catecholoxidases and tyrosinases, laccase and haemocyanin, which occur naturally in the shells of prawn and the like, convert colourless monophenols to diphenols, which are then converted to highly coloured quinones, which then react with amino acids to form complex brown polymers. The complex brown polymers appear as discolouration on the shells, which is often referred to as "blackspot".

In the case of prawns and the like, haemocyanin can activate the melanosis process through laccase activity. In the haemolymph of crustaceans, the haemocyanin concentration is about 1000 times higher than the other phenoloxydase enzymes. It is also believed that haemocyanin and laccase-like enzymes are more thermostable than other enzymes (laccase is more active in pleopods and pereopods), and therefore could start the phenol oxidation again after the product is cooked.

Using refrigeration, iced storage, and frozen storage is insufficient to inhibit melanosis progression - this results in seafood that is unfit for sale. As such, antimelanotic products are commercially used.

Commonly, sulphite-based products, such as sodium metabisulfite are used to delay melanosis. However, sodium metabisulfite has been reported to cause poisoning and allergic reactions, particularly in asthmatic people. Furthermore, release of sodium metabisulfite into the environment regularly occurs, which causes ecological and environmental damage, as taught by Carvalho et al., Chemosphere, Volume 82, Issue 7, 2011 and Boyd et al., Global Aquaculture Advocate, 1 August 2002. Therefore, sulphite-free treatments are needed.

Some metabisulfite alternatives have been developed, such as those which rely on the PPO inhibitor 4-hexylresorcinol (e.g. WO2011077146A1). These have been shown to be highly effective in preventing melanosis in prawns and the like where the prawns have either been:
a) treated raw, frozen, and defrosted either quickly or slowly, or
b) treated cooked, frozen for shorter periods and defrosted slowly.

However, there remains a need for a product that is effective in the prevention of melanosis in prawns and the like where the prawns have been:
a) treated cooked, frozen for longer periods and defrosted quickly.
b) treated raw or cooked and defrosted under challenge protocols/processing conditions (e.g. rapidly defrosting frozen prawns and the like and/or storing at challenge temperature (15-20 °C, high salinity or other strong environments etc.)).

This is considered to be due to the high thermal stability of laccase and haemocyanin enzymes as 4-hexylresorcinol alone shows reduced specificity in inhibiting laccase activity.

Therefore, there is an urgent need to develop new formulas that prevent melanosis in the early hours and the first days in refrigeration, in order to improve the quality and commercial value of these products.

### Summary of the Invention

The present invention provides a solution, a concentrate and a method for the inhibition of melanosis in crustaceans. Nonetheless, the invention is defined by the claims.

The inventors have therefore developed a number of new formulas that are greatly efficacious in the prevention of melanosis in prawns and the like, particularly after prolonged freezing, during quick defrosting, challenge protocols and processing conditions.

By "prawns and the like", the following is included: prawns, white shrimp (*Litopenaeus vannamei*), whiteleg shrimp (*Penaeus vannamei*), giant tiger prawn /Asian tiger shrimp/ black tiger shrimp *(Peneus monodon)* and other shrimp species, nephrops, crabs and other crustacea. Preferably, this refers to prawns, white shrimp (*Litopenaeus vannamei*), whiteleg shrimp (*Penaeus vannamei*), other shrimp species and nephrops. More preferably, this refers to prawns, white shrimp (*Litopenaeus vannamei*), whiteleg shrimp (*Penaeus vannamei*) or other shrimp species. More preferably, this refers to prawns, white shrimp (*Litopenaeus vannamei*) or whiteleg shrimp *(Penaeus vannamei*) and giant tiger prawn /Asian tiger shrimp/ black tiger shrimp *(Peneus monodon).*

A first aspect of the present invention provides a solution for the inhibition of melanosis in prawns and the like, wherein the solution comprises an effective amount of:
a. 4-hexylresorcinol
b. Glycerine
c. Monopropylene Glycol, and
d. EDTA or an acceptable salt or hydrate thereof.

Without wishing to be bound to theory, it is considered that this combination of components synergistically inhibits the radical reaction process that results in melanosis by ensuring that the 4-hexylresorcinol is able to effectively access and inhibit the activation of the polyphenol oxidases that cause melanosis, particularly laccase-like enzymes.

As has been shown in the following examples, the range of concentrations in use of 4-hexylresorcinol is most efficacious in the prevention of melanosis in prawns and the like. 4-hexylresorcinol acts as an inhibitor of PPO enzymes (particularly laccase), and is considered to act synergistically with organic acids (e.g. citric and/or ascorbic acid) and chelating agents (e.g. EDTA). It is an active substance (a copper chelator) recognized as safe when properly applied in foods.

Advantageously, when used in an effective amount to prevent melanosis in prawns and the like, 4-hexylresorcinol does not cause perceptible sensory changes (e.g. taste or texture) to the prawns and the like.

Suitably, the effective amount or working concentration of 4-hexylresorcinol may be between about 0.001-0.006 wt%, about 0.0012-0.0065 wt%, suitably between about 0.003-0.006 wt%, suitably between about 0.0036-0.0062 wt%, suitably about 0.005 wt% 4-hexylresorcinol. Without wishing to be bound by theory, it is believed that this optimised concentration acts in synergistic combination with the other ingredients to provide a suitable prevention of melanosis, even after prolonged freezing, during quick defrosting, challenge protocols and processing conditions.

In embodiments, the solution comprises an effective amount of two humectants: glycerine and monopropylene glycol. Glycerine acts as a moisturiser to the exoskeleton of the prawns and the like, permitting the active compounds to access the relevant parts of the seafood. Monopropylene glycol is both an antioxidant, extending the shelf life of the seafood by preventing deterioration due to oxygen and as a carrier for the other comoonents of the concentrate when at working concentration. Finally, both glycerol and monopropylene glycol act to provide an attractive sheen to the seafood.

Suitably, the effective amount or working concentration of glycerine may be between about 0.01-0.05 wt%, suitably about 0.01-0.04 wt%. Suitably a concentration of glycerine in the range of about 0.03 wt% glycerine to about 0.04 wt% glycerine may be used. Suitably a concentration of glycerine about-0.04 wt% may be used.Without wishing to be bound by theory, it is believed that this provides sufficient moisturisation to the exoskeleton of the prawns and the like, permitting the active compounds to access the relevant parts of the seafood. It is considered that a concentration of glycerine about-0.04 wt% is advantageous in some environmental conditions whilst not unduly impacting the stability of the solution.

Suitably, the effective amount or working concentration of monopropylene glycol may be between about 0.005-0.04 wt%, suitably between about 0.005-0.015 wt%, more suitably about 0.01 wt% monopropylene glycol. Without wishing to be bound by theory, it is believed that this optimised concentration provides the ideal antioxidant behaviour and is a suitable amount of carrier for the other ingredients - that it acts synergistically with the 4-hexylresorcinol to prevent melanosis.

In embodiments, the solution comprises an effective amount of the chelating agent EDTA, or an acceptable salt or hydrate thereof. EDTA acts as a chelating agent, and acts synergistically with the PPO inhibitors. Suitably, the effective amount or working concentration of EDTA or an acceptable salt or hydrate thereof may be about 0.001-0.002 wt%, suitably about 0.0015 wt% EDTA or an acceptable salt or hydrate thereof.

Suitably, the solution may further comprise an effective amount of citric acid and/or ascorbic acid. Citric acid and/or ascorbic acid act as a preservative, PH buffer, antioxidant and chelating agent. These have been shown to enhance the activity of the PPO inhibitors of the present invention.

Suitably, the effective amount or working concentration of citric acid or an acceptable salt or hydrate thereof may be about 0.01-0.02 wt%, suitably about 0.013 wt%, suitably about 0.0119 wt% citric acid or an acceptable salt or hydrate thereof.

Suitably, the effective amount or working concentration of ascorbic acid or an acceptable salt or hydrate thereof may be about 0.002 wt % ascorbic acid or an acceptable salt or hydrate thereof.

Suitably, the solution may further comprise an effective amount of sodium chloride, which acts as a pH buffer. Suitably, the effective amount or working concentration of sodium chloride is about 0.006-0.01 wt%, more preferably about 0.008 wt% sodium chloride. Without wishing to be bound by theory, it is believed that the sodium chloride acts as a pH buffer.

Suitably, the solution may further comprise an effective amount of copper chelators, preferably 8-hydroxyquinoline, catechin or ferulic acid. Suitably, the effective amount or working concentration of 8-hydroxyquinoline is between about 0.001-0.007 wt%, preferably between about 0.004-0.006 wt%, more preferably about 0.005 wt% 8-hydroxyquinoline.

As will be readily understood by the person skilled in the art, it is the working concentration of components that is important to the end user to provide the desired effects. However, shipping the useful materials to the end user benefits from the supply of a concentrate to reduce shipping volumes and logistical expenses. This may then be sold to the end user as the concentrate, or shipped from the manufacturer and diluted to a working concentration and sold ready for use. Starting from the working concentration of each of the components in the solution, the person skilled in the art would readily be able to calculate the required concentration of each of the components in the concentrate, and vice versa.

Thus, a second aspect of the present invention provides a concentrate of the solution of the first aspect, wherein the concentrate is provided such that a dilution of between about 1:800-1:1000 v/v with water provides the desired working concentrations of solution components.

Suitably the concentrate formulation may comprise or consist in the range:
25 to 45 wt% Glycerine, suitably about 40 wt% Glycerine
5 to 15 wt% Monopropylene Glycol,
1 to 7 wt% 4-hexylresorcinol, suitably 2 to 6 wt% 4-hexylresorcinol, suitably 2 to 5 wt% 4-hexylresorcinol

and optionally 8.0 wt% Sodium Chloride (for applications where the concentrate is provided for use by dilution with fresh water),
with the remainder being water.

Suitably the concentrate formulation may comprise or consist in the range:
25 to 45 wt% Glycerine, suitably about 40 wt% Glycerine
5 to 15 wt% Monopropylene Glycol,
1 to 7 wt% 4-hexylresorcinol, suitably 2 to 6 wt% 4-hexylresorcinol, suitably 2 to 5 wt% 4-hexylresorcinol
9 to 12 wt% Citric Acid,
1 to 2 wt% Disodium EDTA,

and optionally 8.0 wt% Sodium Chloride (for applications where the concentrate is provided for use by dilution with fresh water),
with the remainder being water.

Suitably the concentrate formulation may comprise or consist in the range:
25 to 35 wt% Glycerine,
5 to 15 wt% Monopropylene Glycol,
1 to 7 wt% 4-hexylresorcinol, suitably 2 to 6 wt% 4-hexylresorcinol, suitably 2 to 5 wt% 4-hexylresorcinol
9 to 12 wt% Citric Acid,
1 to 2 wt% Disodium EDTA,

and optionally 8.0 wt% Sodium Chloride (for applications where the concentrate is provided for use by dilution with fresh water),
with the remainder being water.

Suitably the pH is about 1.4 to 1.7, suitably 1.5, suitably 1.59. Suitably the density is about 1.2, suitably 1.2049.

Suitably at least 1, at least 1.2, at least 1.5, at least 1.7, at least 2, at least 2.5, a least 3, at least 3.5, at least 4 wt% 4-hexylresorcinol may be used in the formulation. Suitably less than 6, less than 5.5, less than 5, less than 4 wt%, less than 3.5 4-hexylresorcinol may be used in the concentrate formulations and then suitably diluted working solutions.

Suitably the concentrate may be configured such that dilution with fresh water provides the components at their intended working concentrations. Suitably the concentrate may be configured such that dilution with a mixture of fresh water and salt water provides the components at their intended working concentrations. Suitably the concentrate may be configured such that dilution with sea water with a sodium chloride concentration of about 3.1-3.8% provides the components at their intended working concentrations. An advantage of dilution with either a mixture of fresh water and salt water, or a mixture of fresh water and sea water with a sodium chloride concentration of about 3.1-3.8% is that the concentrate may be transported on sea-going fishing boats (e.g. shrimp trawlers) and diluted to the working concentration using the surrounding sea water, thus minimising the amount of equipment required to use the solution of the present invention.

Appropriately, concentrates that are provided for use by dilution with a mixture of fresh water and an appropriate amount of salt water/sea water may be provided without sodium chloride, as the salinity provided by the salt water/seawater is adequate for pH buffering and is not deleterious when preventing melanosis in prawns and the like. For example, with a 1000x concentrate of the present invention intended for use by dilution with a mixture of fresh water and an appropriate amount of salt water, 100 mL of concentrate lacking sodium chloride may be mixed with ~229 mL of seawater with a salinity of ~3.5 wt% sodium chloride and topped up to a final volume of 100 L to a final concentration of sodium chloride of ~0.008%

It will be understood that the salinity of seawater fluctuates, however a working concentration of sodium chloride below 26 ppt (i.e. the intracellular salinity of the body of the prawns and the like), is acceptable. Over 26 ppt, the prawns and the like could lose intracellular water and this might produce some dehydration.

Suitably, the concentrate of the second aspect may have been diluted to a working concentration.

A third aspect of the present invention provides a method of inhibiting melanosis in prawns and the like wherein the method comprises either:
a. Applying a solution of the first aspect to prawns and the like, or;
b. Diluting a concentrate of the second aspect with:
   i. fresh water,
   ii. a mixture of fresh water and salt water, or
   iii. a mixture of fresh water and sea water with a sodium chloride concentration of about 3.1-3.8%
to provide the solution of the first aspect, and applying the solution to prawns and the like.

Suitably, the method may involve where the solution or diluted concentrate is applied to the prawns and the like for at least 5 minutes. This time span is appropriate for a commercial setting, but is also enough to suitably prevent melanosis.

Suitably, the prawns and the like may be cooked prawns and the like. Suitably, the prawns and the like may be raw prawns and the like.

Suitably, the method may further comprise freezing the prawns and the like. Suitably, the method may further comprise defrosting the prawns and the like. Suitably, the defrosting may be rapid defrosting, such as defrosting at room temperature for 12h.

Suitably, the prawns and the like may be prawns, white shrimp (Litopenaeus vannamei), whiteleg shrimp (Penaeus vannamei), giant tiger prawn /Asian tiger shrimp/ black tiger shrimp *(Peneus monodon)* and other shrimp species, nephrops, crabs and other crustacea.

Suitably, applying the solution may be performed at or below 4 °C. Suitably, this temperature may be maintained by applying the solution to the prawns and the like in an ice slurry.

Suitably, applying the solution may further comprise gentle mixing of the solution and the prawns and the like.

An embodiment of the solution of the first aspect comprises or consists of approximately:
a. 0.01 to 0.05 wt% Glycerine,
b. 0.005 to 0.015 wt% Monopropylene Glycol,
c. 0.002 to 0.006 wt% 4-hexylresorcinol,
d. 0.005 to 0.03 wt% Citric Acid,
e. 0.0005 to 0.002 wt% Disodium EDTA,

and optionally around 0.008 wt% Sodium Chloride,
With the remainder being water.

An embodiment of the solution of the first aspect comprises or consists of approximately:
a. 0.01 to 0.04 wt% Glycerine,
b. 0.005 to 0.015 wt% Monopropylene Glycol,
c. 0.002 to 0.006 wt% 4-hexylresorcinol,
d. 0.005 to 0.03 wt% Citric Acid,
e. 0.0005 to 0.002 wt% Disodium EDTA,

and optionally around 0.008 wt% Sodium Chloride,
With the remainder being water.

An embodiment of the concentrate of the second aspect at a 1000x working concentration comprises or consists of approximately:
45 wt% Glycerine,
10 wt% Monopropylene Glycol,
3.6 wt% 4-hexylresorcinol,
11.9 wt% Citric Acid,
1.5 wt% Disodium EDTA,

and optionally 8.0 wt% Sodium Chloride (for applications where the concentrate is provided for use by dilution fresh water),
With the remainder being water.

An embodiment of the concentrate of the second aspect at a 1000x working concentration comprises or consists of approximately:
40 wt% Glycerine,
10 wt% Monopropylene Glycol,
3.6 wt% 4-hexylresorcinol,
11.9 wt% Citric Acid,
1.5 wt% Disodium EDTA,

and optionally 8.0 wt% Sodium Chloride (for applications where the concentrate is provided for use by dilution fresh water),
With the remainder being water.

An embodiment of the concentrate of the second aspect at a 1000x working concentration comprises or consists of approximately:
30 wt% Glycerine,
10 wt% Monopropylene Glycol,
3.6 wt% 4-hexylresorcinol,
11.9 wt% Citric Acid,
1.5 wt% Disodium EDTA,

and optionally 8.0 wt% Sodium Chloride (for applications where the concentrate is provided for use by dilution fresh water),
With the remainder being water.

Suitably, this embodiment may be used in the method of the third aspect.

An embodiment of the solution of the first aspect comprises or consists of approximately:
a. 0.045 wt% Glycerine,
b. 0.01 wt% Monopropylene Glycol,
c. 0.005 wt% 4-hexylresorcinol,
d. 0.0119 wt% Citric Acid,
e. 0.0015 wt% Disodium EDTA,

and optionally 0.008 wt% Sodium Chloride,
With the remainder being water.

An embodiment of the solution of the first aspect comprises or consists of approximately:
a. 0.04 wt% Glycerine,
b. 0.01 wt% Monopropylene Glycol,
c. 0.005 wt% 4-hexylresorcinol,
d. 0.0119 wt% Citric Acid,
e. 0.0015 wt% Disodium EDTA,

and optionally 0.008 wt% Sodium Chloride,
With the remainder being water.

An embodiment of the solution of the first aspect comprises or consists of approximately:
a. 0.03 wt% Glycerine,
b. 0.01 wt% Monopropylene Glycol,
c. 0.005 wt% 4-hexylresorcinol,
d. 0.0119 wt% Citric Acid,
e. 0.0015 wt% Disodium EDTA,

and optionally 0.008 wt% Sodium Chloride,
With the remainder being water.

An embodiment of the concentrate of the second aspect at a 1000x working concentration comprises or consists of approximately:
45 wt% Glycerine,
10 wt% Monopropylene Glycol,
5 wt% 4-hexylresorcinol,
11.9 wt% Citric Acid,
1.5 wt% Disodium EDTA,

An embodiment of the concentrate of the second aspect at a 1000x working concentration comprises or consists of approximately:
40 wt% Glycerine,
10 wt% Monopropylene Glycol,
5 wt% 4-hexylresorcinol,
11.9 wt% Citric Acid,
1.5 wt% Disodium EDTA,

An embodiment of the concentrate of the second aspect at a 1000x working concentration comprises or consists of approximately:
30 wt% Glycerine,
10 wt% Monopropylene Glycol,
5 wt% 4-hexylresorcinol,
11.9 wt% Citric Acid,
1.5 wt% Disodium EDTA,

and optionally 8.0 wt% Sodium Chloride (for applications where the concentrate is provided for use by dilution fresh water),
With the remainder being water.

An embodiment of the concentrate of the second aspect at a 1000x working concentration comprises or consists of approximately:
45 wt% Glycerine,
10 wt% Monopropylene Glycol,
3 wt% 4-hexylresorcinol,
11.9 wt% Citric Acid,
1.5 wt% Disodium EDTA,

and optionally 8.0 wt% Sodium Chloride (for applications where the concentrate is provided for use by dilution fresh water),
With the remainder being water.

An embodiment of the concentrate of the second aspect at a 1000x working concentration comprises or consists of approximately:
40 wt% Glycerine,
10 wt% Monopropylene Glycol,
3 wt% 4-hexylresorcinol,
11.9 wt% Citric Acid,
1.5 wt% Disodium EDTA,

and optionally 8.0 wt% Sodium Chloride (for applications where the concentrate is provided for use by dilution fresh water),
With the remainder being water.

An embodiment of the concentrate of the second aspect at a 1000x working concentration comprises or consists of approximately:
30 wt% Glycerine,
10 wt% Monopropylene Glycol,
3 wt% 4-hexylresorcinol,
11.9 wt% Citric Acid,
1.5 wt% Disodium EDTA,

and optionally 8.0 wt% Sodium Chloride (for applications where the concentrate is provided for use by dilution fresh water),
With the remainder being water.

Suitably, such embodiments may be used in the method of the third aspect.

The method of the present invention provides a suitable anti-melanotic effect, such that the prawns and the like may be either transported chilled or frozen and defrosted at point of need, then resist melanosis for a number of days. Indeed, this method even proves suitable after prolonged freezing, during quick defrosting, challenge protocols and processing conditions.

In a fourth aspect of the present invention is provided a solution for the prevention of melanosis in prawns and the like using an effective amount of 8-hydroxyquinoline.

Suitably, the effective amount or working concentration of 8-hydroxyquinoline may be about 0.001-0.007 wt%, preferably about 0.004-0.006 wt%, more preferably about 0.005 wt%.

Without wishing to be bound to theory, it is considered that 8-hydroxyquinoline inhibits the radical reaction process that results in melanosis by acting as a copper chelator and therefore inhibits the activation of the polyphenol oxidases that cause melanosis, particularly laccase-like enzymes.

As has been shown in the following examples, this range of concentrations in use of 8-hydroxyquinoline is most efficacious in the prevention of melanosis in prawns and the like. 8-hydroxyquinoline acts as an inhibitor of PPO enzymes (particularly laccase), and is considered to act synergistically with organic acids (e.g. citric and/or ascorbic acid) and chelating agents (e.g. EDTA). It is an active substance (a copper chelator) recognized as safe when properly applied in foods.

Advantageously, when used in an effective amount to prevent melanosis in prawns and the like, 8-hydroxyquinoline does not cause perceptible sensory changes (e.g. taste or texture) to the prawns and the like.

In embodiments, the solution of the fourth aspect comprises an effective amount of two humectants: glycerine and monopropylene glycol. Glycerine acts as a moisturiser to the exoskeleton of the prawns and the like, permitting the active compounds to access the relevant parts of the seafood. Monopropylene glycol is both an antioxidant, extending the shelf life of the seafood by preventing deterioration due to oxygen and as a carrier for the other components of the concentrate when at working concentration. Finally, both glycerol and monopropylene glycol act to provide an attractive sheen to the seafood.

Suitably, the effective amount or working concentration of glycerine may be between about 0.01-0.05 wt%, suitably 0.01-0.04 wt%, suitably about 0.03 wt% to about 0.04 wt% glycerine, suitably about 0.03 wt%, suitably about 0.04 wt%. Without wishing to be bound by theory, it is believed that this provides sufficient moisturisation to the exoskeleton of the prawns and the like, permitting the active compounds to access the relevant parts of the seafood.

Suitably, the effective amount or working concentration of monopropylene glycol may be between about 0.005-0.04 wt%, preferably between about 0.005-0.015 wt%, more preferably about 0.01 wt% monopropylene glycol. Without wishing to be bound by theory, it is believed that this optimised concentration provides the ideal antioxidant behaviour and is a suitable amount of carrier for the other ingredients - that it acts synergistically with the 4-hexylresorcinol to prevent melanosis.

In embodiments, the solution of the fourth aspect comprises an effective amount of the chelating agent EDTA, or an acceptable salt or hydrate thereof. EDTA acts as a chelating agent, and acts synergistically with the PPO inhibitors. Suitably, the effective amount or working concentration of EDTA or an acceptable salt or hydrate thereof may be about 0.001-0.002 wt%, preferably about 0.0015 wt% EDTA or an acceptable salt or hydrate thereof.

Suitably, the solution of the fourth aspect may further comprise an effective amount of citric acid and/or ascorbic acid. Citric acid and/or ascorbic acid act as a preservative, PH buffer, antioxidant and chelating agent. These have been shown to enhance the activity of the PPO inhibitors of the present invention.

Suitably, the effective amount or working concentration of citric acid or an acceptable salt or hydrate thereof may be about 0.01-0.02 wt%, preferably about 0.0119 wt% citric acid or an acceptable salt or hydrate thereof.

Suitably, the effective amount or working concentration of ascorbic acid or an acceptable salt or hydrate thereof may be about 0.002 wt % ascorbic acid or an acceptable salt or hydrate thereof.

Suitably, the solution of the fourth aspect may further comprise an effective amount of sodium chloride, which acts as a pH buffer. Suitably, the effective amount or working concentration of sodium chloride is about 0.006-0.01 wt%, more preferably about 0.008 wt% sodium chloride. Without wishing to be bound by theory, it is believed that the sodium chloride acts as a pH buffer.

As would be understood by a person of skill in the art the working combinations of the components discussed above can be provided in combination to provide a solution, either only with these components or with additional components. The remainder of the wt% being water.

As will be readily understood by the person skilled in the art, it is the working concentration of components that is important to the end user to provide the desired effects. However, shipping the useful materials to the end user benefits from the supply of a concentrate to reduce shipping volumes and logistical expenses. This may then be sold to the end user as the concentrate, or shipped from the manufacturer and diluted to a working concentration and sold ready for use. Starting from the working concentration of each of the components in the solution, the person skilled in the art would readily be able to calculate the required concentration of each of the components in the concentrate, and vice versa.

In a fifth aspect of the present invention is provided a concentrate of the fourth aspect for use in the preparation of a solution for inhibiting melanosis in prawns and the like using 8-hydroxyquinoline, wherein the concentrate of the fourth aspect is provided such that dilution with water provides the solution at a working concentration.

Suitably, the concentrate of the fifth aspect may be provided such that a dilution of between about 1:800-1:1000 v/v with water provides the solution of the fourth aspect at a working concentration.

Suitably the concentrate of the fifth aspect may be configured such that dilution with fresh water provides the components at their intended working concentrations. Suitably the concentrate of the fifth aspect may be configured such that dilution with a mixture of fresh water and salt water provides the components at their intended working concentrations. Suitably the concentrate of the fifth aspect may be configured such that dilution with seawater with a sodium chloride concentration of about 3.1-3.8% provides the components at their intended working concentrations.

An advantage of dilution with either a mixture of fresh water and salt water, or a mixture of fresh water and sea water with a sodium chloride concentration of about 3.1-3.8% is that the concentrate may be transported on sea-going fishing boats (e.g. shrimp trawlers). This may then be diluted to the working concentration using the surrounding sea water, thus minimising the amount of equipment required to use the solution of the present invention.

Appropriately, concentrates that are provided for use by dilution with a mixture of fresh water and an appropriate amount of salt water/sea water may be provided without sodium chloride, as the salinity provided by the salt water/seawater is adequate for pH buffering and is not deleterious when preventing melanosis in prawns and the like. For example, with a 1000x concentrate of the present invention intended for use by dilution with a mixture of fresh water and an appropriate amount of salt water, 100 mL of concentrate lacking sodium chloride may be mixed with ~229 mL of seawater with a salinity of ~3.5 wt% sodium chloride and topped up to a final volume of 100 L to a final concentration of sodium chloride of ~0.008%

It will be understood that the salinity of seawater fluctuates, however a working concentration of sodium chloride below 26 ppt (i.e. the intracellular salinity of the body of the prawns and the like), is acceptable. Over 26 ppt, the prawns and the like could lose intracellular water and this might produce some dehydration.

Suitably, the concentrate of the fifth aspect may have been diluted to a working concentration.

A sixth aspect of the present invention provides a method of inhibiting melanosis in prawns and the like wherein the method comprises either:
a. Applying a solution of the fourth aspect to prawns and the like, or;
b. Diluting a concentrate of the fifth aspect with water to provide a solution of the fourth aspect, and
applying the solution to prawns and the like.

Suitably, the method may involve where the solution or diluted concentrate is applied to the prawns and the like for at least 5 minutes. This time span is appropriate for a commercial setting, but is also enough to suitably prevent melanosis.

Suitably, the prawns and the like may be cooked prawns and the like. Suitably, the prawns and the like may be raw prawns and the like.

Suitably, the method may further comprise freezing the prawns and the like. Suitably, the method may further comprise defrosting the prawns and the like. Suitably, the defrosting may be rapid defrosting, such as defrosting at room temperature for 12h.

Suitably, the prawns and the like may be prawns, white shrimp (Litopenaeus vannamei), whiteleg shrimp (Penaeus vannamei), giant tiger prawn /Asian tiger shrimp/ black tiger shrimp *(Peneus monodon)* and other shrimp species, nephrops, crabs and other crustacea.

Suitably, applying the solution may be performed at or below 4 °C. Suitably, this temperature may be maintained by applying the solution to the prawns and the like in an ice slurry.

Suitably, applying the solution may further comprise gentle mixing of the solution and the prawns and the like.

Suitably the solution of the fourth aspect comprises 8-hydroxyquinoline and may further comprise at least two, at least three, at least four, at least five, at least six or all of the following components:
a. An effective amount of 4-hexylresorcinol such that in use the working concentration of 4-hexylresorcinol is about 0.0012-0.0065 wt%, preferably about 0.0036-0.0062 wt%, more preferably about 0.005 wt%.
b. An effective amount of glycerine such that in use the working concentration of glycerine is about 0.02-0.05 wt%, suitably 0.02-0.045 wt%, suitably 0.02-0.04 wt%, suitably about 0.03 wt%, suitably about 0.04 wt%.
c. An effective amount of monopropylene glycol such that in use the working concentration of monopropylene glycol is about 0.005-0.04 wt%, preferably about 0.01 wt%.
d. An effective amount of EDTA or an acceptable salt or hydrate thereof such that in use the working concentration of EDTA is about 0.001-0.002 wt%, preferably about 0.0015 wt%.
e. An effective amount of citric acid or an acceptable salt or hydrate thereof such that in use the working concentration of citric acid or an acceptable salt or hydrate thereof is about 0.01-0.02 wt%, preferably 0.0119 wt%.
f. An effective amount of ascorbic acid or an acceptable salt or hydrate thereof such that in use the working concentration of ascorbic acid or an acceptable salt or hydrate thereof is about 0.002 wt%.
g. An effective amount of sodium chloride such that in use the working concentration of sodium chloride is about 0.006-0.01 wt%, preferably about 0.008 wt%.

Suitably the concentrate of the fifth aspect may be provided for use by dilution with water. Suitably the concentrate may be provided for use by dilution with a mixture of fresh water and an appropriate amount of salt water, suitably seawater (for example water with a sodium chloride concentration of about 3.1-3.8 wt%, typically about 3.5 wt%). Appropriately, concentrates that are provided for use by dilution with a mixture of fresh water and an appropriate amount of salt water may be provided without sodium chloride, as the salinity provided by the salt water is adequate for pH buffering and is not deleterious when preventing melanosis in prawns and the like. For example, with a 1000x concentrate of the present invention intended for use by dilution with a mixture of fresh water and an appropriate amount of salt water, 1 L of concentrate lacking sodium chloride may be mixed with ~229 mL of seawater with a salinity of ~3.5 wt% sodium chloride and topped up to a final volume of 100 L to a final concentration of sodium chloride of ~0.008%

An embodiment of the concentrate of the fifth aspect at a 1000x working concentration consists of approximately:
a. 45 wt% Glycerine,
b. 10 wt% Monopropylene glycol,
c. 0.4 wt% 8-hydroxyquinoline,
d. 11.9 wt% Citric acid,
e. 1.5 wt% Disodium EDTA,
and optionally 8.0 wt% Sodium Chloride (for applications where the concentrate is provided for use by dilution with fresh water);
With the remainder being water.

An embodiment of the concentrate of the fifth aspect at a 1000x working concentration consists of approximately:
a. 40 wt% Glycerine,
b. 10 wt% Monopropylene glycol,
c. 0.4 wt% 8-hydroxyquinoline,
d. 11.9 wt% Citric acid,
e. 1.5 wt% Disodium EDTA,

and optionally 8.0 wt% Sodium Chloride (for applications where the concentrate is provided for use by dilution with fresh water);
With the remainder being water.

An embodiment of the concentrate of the fifth aspect at a 1000x working concentration consists of approximately:
a. 30 wt% Glycerine,
b. 10 wt% Monopropylene glycol,
c. 0.4 wt% 8-hydroxyquinoline,
d. 11.9 wt% Citric acid,
e. 1.5 wt% Disodium EDTA,

and optionally 8.0 wt% Sodium Chloride (for applications where the concentrate is provided for use by dilution with fresh water);
With the remainder being water.

Suitably, this embodiment may be used in the method of the sixth aspect.

An embodiment of the concentrate of the fifth aspect at a 1000x working concentration consists of approximately:
a. 45 wt% Glycerine,
b. 10 wt% Monopropylene Glycol,
c. 0.6 wt% 8-hydroxyquinoline,
d. 11.9 wt% Citric Acid,
e. 1.5 wt% Disodium EDTA,

and optionally 8.0 wt% Sodium Chloride (for applications where the concentrate is provided for use by dilution with fresh water),
With the remainder being water.

An embodiment of the concentrate of the fifth aspect at a 1000x working concentration consists of approximately:
a. 40 wt% Glycerine,
b. 10 wt% Monopropylene Glycol,
c. 0.6 wt% 8-hydroxyquinoline,
d. 11.9 wt% Citric Acid,
e. 1.5 wt% Disodium EDTA,

and optionally 8.0 wt% Sodium Chloride (for applications where the concentrate is provided for use by dilution with fresh water),
With the remainder being water.

An embodiment of the concentrate of the fifth aspect at a 1000x working concentration consists of approximately:
a. 30 wt% Glycerine,
b. 10 wt% Monopropylene Glycol,
c. 0.6 wt% 8-hydroxyquinoline,
d. 11.9 wt% Citric Acid,
e. 1.5 wt% Disodium EDTA,

and optionally 8.0 wt% Sodium Chloride (for applications where the concentrate is provided for use by dilution with fresh water),
With the remainder being water.

Suitably, this embodiment may be used in the method of the sixth aspect.

Without wishing to be bound by theory, the inventors consider the concentrate and solution disclosed herein may have uses other than for prevention of the inhibition of melanosis in prawns and the like for example the inhibition of a change in colour to inhibit darkening of a tissue, bone, tooth, or nail.

### Brief Description of the Figures

Figure 1. Shows a melanosis or blackspot progression scale created for statistical analysis purposes. A score of 3 or higher reflects prawns and the like considered objectionable by the United States Department of Commerce Seafood Inspection Manual (USDC 2011). All scores are determined by evaluating one side of each prawns and the like.
Figure 2. Shows the results of a long-freeze and challenge defrost using prawns treated with a composition of the present invention (Example 1, Composition 1).
Figure 3. Pictures of the results of a long-freeze and challenge defrost using prawns treated with a composition of the present invention (Example 1, Composition 1).
Figure 4. Shows the results of a long-freeze and challenge defrost using prawns treated with a composition of the present invention (Example 1, Composition 2).
Figure 5. Pictures of the results of a long-freeze and challenge defrost using prawns treated with a composition of the present invention (Example 1, Composition 2).
Figure 6. Shows the results and pictures of a long-freeze and challenge defrost using prawns treated with a composition of the present invention (Example 2, Composition 1).
Figure 7. Shows the results of Example 3: an assay to assess the ability of embodiments of the present invention to prevent melanosis in a cooked prawn challenge defrost test (storage at room temperature for 12h), following prolonged freezing (30 days). 1. Control: No Treatment, 2. Control: Prior treatment - a 4-Hexylresorcinol composition of PCT/GB2010/052182, 12. 1.2% 4-Hexylresorcinol and 13. 1.2% 4-Hexylresorcinol, 0.46% 8-Hydroxyquinoline.
Figure 8. Shows the results of Example 4: an assay to assess the dosage range of 8-Hydroxyquinoline to prevent melanosis in a raw prawn defrost test.
Figure 9. Shows the results of further long-freeze and challenge defrost testing using prawns treated with a composition of the present invention (Example 1, Composition 1).
Figure 10. Pictures of the results of prawns treated with a composition of the present invention (Example 1, Composition 1), which were then refrigerated for 48 hours before being subjected to 12 hours at room temperature.
Figure 11. Pictures of the results of prawns treated with a composition of the present invention (Example 1, Composition 1), following a 60-day freeze and by 12 hours at challenge defrost temperatures.
Figure 12. Shows the results of further long-freeze and challenge defrost testing using prawns treated with a composition of the present invention (Example 1, Composition 1 but with a glycerine concentration of 40%).
Figure 13. Pictures of the results of prawns treated with a composition of the present invention (Example 1, Composition 1 but with a glycerine concentration of 40%), following a 90-day freeze and by 12 hours at challenge defrost temperatures.

### Definitions

Throughout the specification, unless the context demands otherwise, the terms 'comprise' or 'include', or variations such as 'comprises' or 'comprising', 'includes' or 'including' will be understood to imply the includes of a stated integer or group of integers, but not the exclusion of any other integer or group of integers.

As used herein, the articles "a" and "an" refer to one or to more than one (for example to at least one) of the grammatical object of the article.

"About" shall generally mean an acceptable degree of error for the quantity measured given the nature or precision of the measurements.

"Prolonged freezing" shall generally mean being frozen at approximately -20 °C at least 20 days before being thawed. Suitably, "prolonged freezing" refers to being frozen at approximately -20 °C for between about 20, 25, 30, 35, 40, 45, 50, 55, 60, 65, 70, 75, 80, 85, 90 or >90 days.

"Challenge conditions" shall generally mean storage at room temperature, approximately 15-20 °C, for between about 2 h, 4 h, 6 h, 8 h, 10 h, 12 h, 14 h, 16 h, 18 h, 20 h, 22 h and 24 h.

"Quick defrosting" and "rapid defrosting" shall generally mean thawing from frozen at room temperature, approximately 15-20 °C, for between about 2 h, 4 h, 6 h, 8 h, 10 h and 12 h.An embodiment of the present invention will now be described by way of example only with reference to the accompanying figures.

### Detailed Description of the Invention

### Example 1 - Use of Formulas Comprising 4-hexylresorcinol in Long-Freeze, Challenge Defrost Scenarios

An assay was conducted to assess the ability of embodiments of the present invention to suitably prevent melanosis in a cooked and raw prawn challenge defrost test, following prolonged freezing.

The following concentrates were provided:
1. Example 1 Concentrate 1 at 1000x working concentration:
   a. 5 wt % 4-hexylresorcinol
   b. 30 wt % Glycerine
   c. 10 wt % Monopropylene glycol
   d. 1.5 wt% Disodium EDTA
   e. 11.9 wt % Citric acid
   f. 8.0 wt% Sodium chloride
   With the remainder being water.
2. Example 1 Concentrate 2 at 1000x working concentration:
   a. 3.6 wt % 4-hexylresorcinol
   b. 30 wt % Glycerine
   c. 10 wt % Monopropylene glycol
   d. 1.5 wt% Disodium EDTA
With the remainder being water.

Example 1 Concentrate 1 was diluted with fresh water to its working concentration to form a solution. Cooked and raw prawns *(Penaeus vannamei*) were provided and treated with the various solutions for 5 minutes.

All prawns and the like have similar types and quantities of enzymes, however as taught in Gonçalves et al., (2016). Melanosis in crustaceans, a review. LWT - Food Science and Technology. 65. 799. 10.1016/j.lwt.2015.09.011, *P*. *vannamei* has one the highest concentrations and varieties of relevant enzymes. As such, without wishing to be bound by theory it is considered that if the prevention and treatment of melanosis can be effectively demonstrated in *P*. *vannamei,* then these results can be extrapolated to other species of prawns and the like.

A negative control (no-treatment control) was provided where the equivalent amount of water was used to treat the same number of cooked and uncooked prawns.

A positive control was provided where the equivalent amount of a standard sodium metabisulfate treatment was used at the manufacturer's instructions to treat the same number of cooked and uncooked prawns.

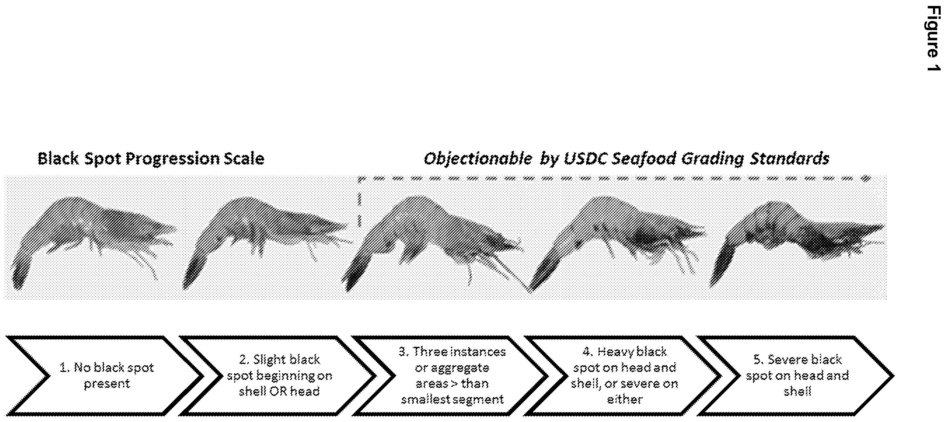

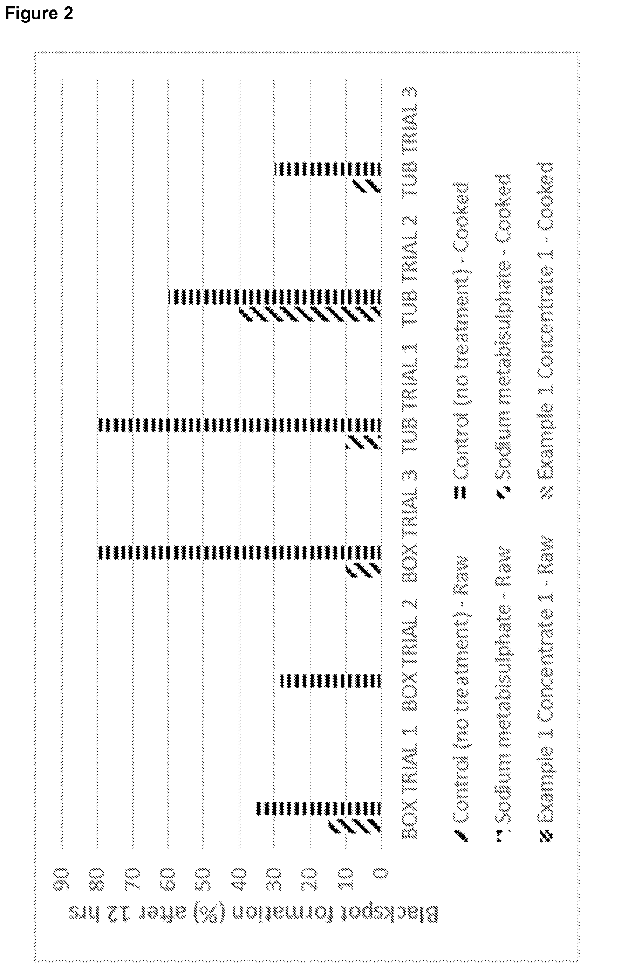

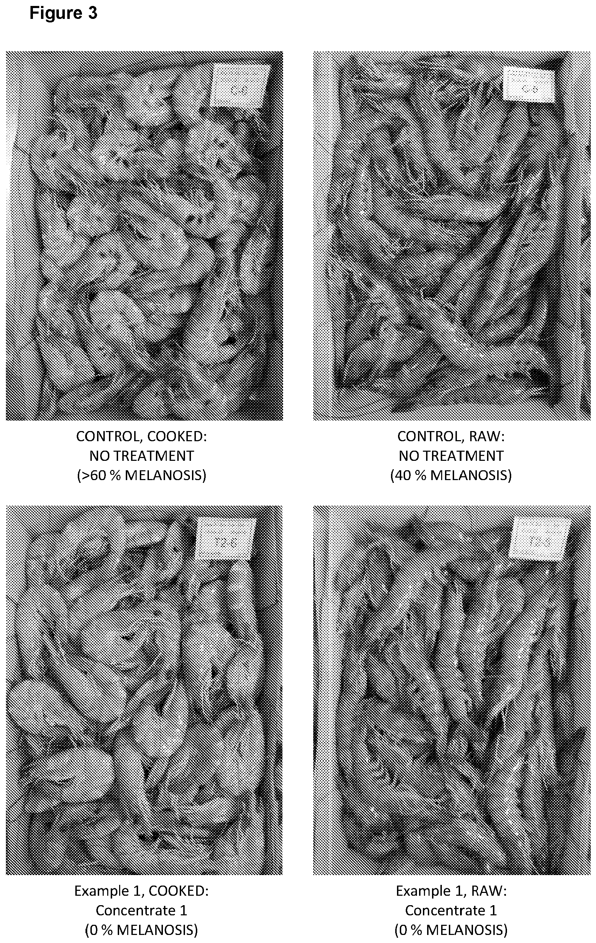

The prawns were then stored at -20 °C for 30 days before being thawed overnight at 4-5 °C. The prawns were then stored at challenge conditions (room temperature, approximately 15-20 °C, monitored at 0 h, 2 h, 5 h, 8 h, 11 h and 24 h). These were then scored according to the 1-8 gradations version of the "black spot progression scale" as shown in Figure 1. The results of the non-challenge conditions are shown in Table 1 and Figure 2. Pictures of some of the prawns are shown in Figure 3.

**Table 1: Comparison of the use of treatments of the present invention under challenge conditions to prevent the onset of melanosis, scored as the percentage of prawns with melanosis above level 1.**

| Blackspot formation (%) after 12 hrs | | | | | | |
|---|---|---|---|---|---|---|
| | BOX TRIAL 1 | BOX TRIAL 2 | BOX TRIAL 3 | TUB TRIAL 1 | TUB TRIAL 2 | TUB TRIAL 3 |
| Control (no treatment) - Raw | 15 | 0 | 10 | 10 | 40 | 8 |
| Control (no treatment) - Cooked | 35 | 28 | 80 | 80 | 60 | 30 |
| Sodium metabisulphate - Raw | 0 | 0 | 0 | 0 | 0 | 0 |
| Sodium metabisulphate - Cooked | 0 | 0 | 0 | 0 | 0 | 0 |
| Example 1 Concentrate 1 - Raw | 0 | 0 | 0 | 0 | 0 | 0 |
| Example 1 Concentrate 1 - Cooked | 0 | 0 | 0 | 0 | 0 | 0 |

These results clearly indicate that a revised 4-hexylresorcinol formula is suitable for preventing melanosis in prawns and the like, even following both prolonged freezing (e.g. 30 days) and challenge protocols. As previously stated, 4-hexylresorcinol is a suitable alternative to formulae which rely on sodium metabisulfite, therefore avoiding allergies, environmental and ecological damages.

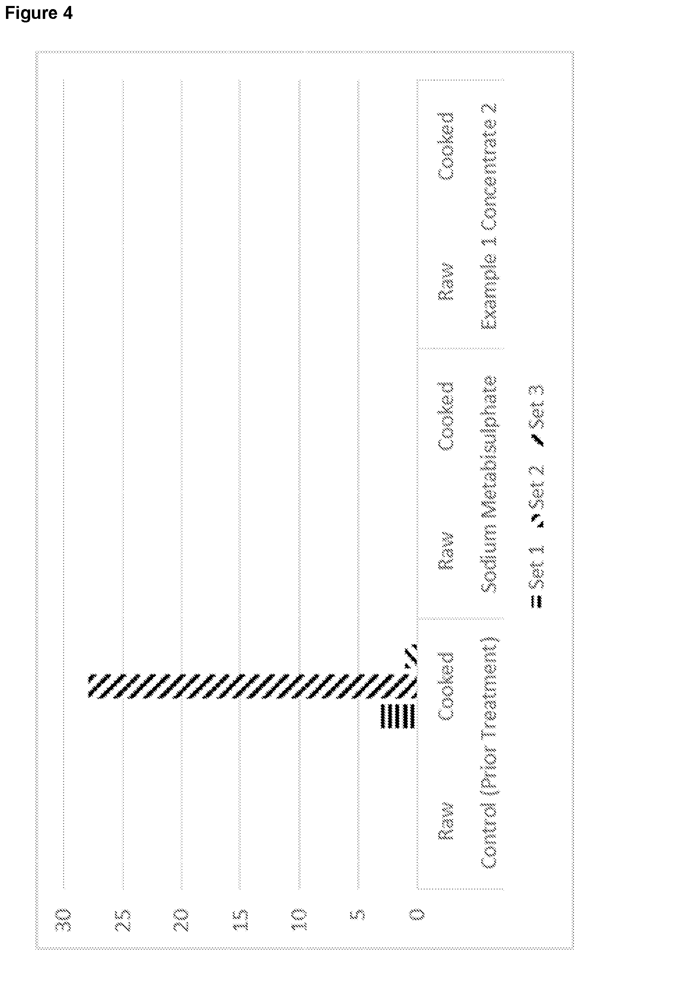

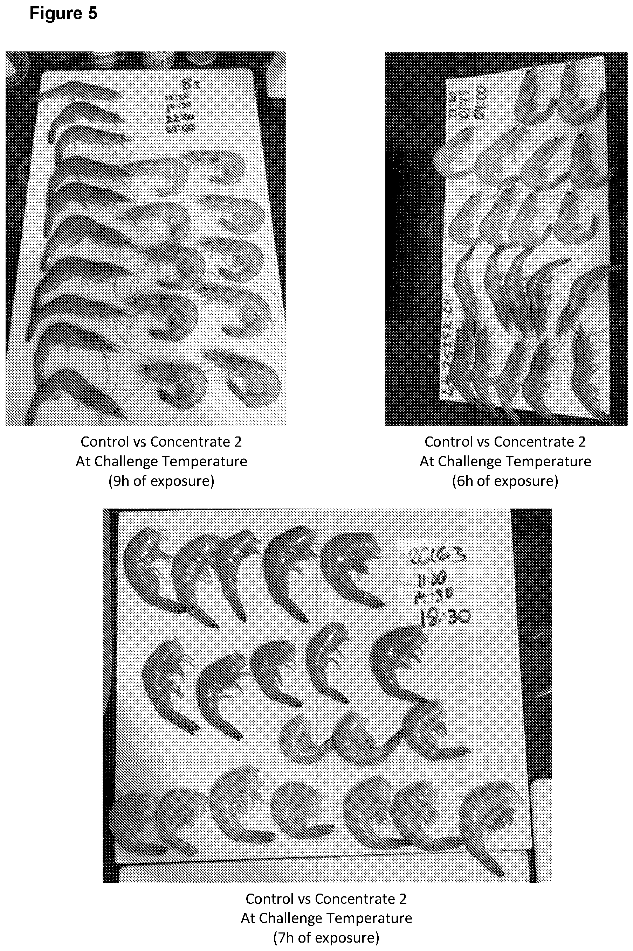

This experiment was repeated using Example 1 Concentrate 2, diluted with a mixture of fresh water and salt water with a salinity of ~3.5 wt% sodium chloride, the results of which are shown in Table 2, Figures 4 and 5.

**Table 2: Comparison of the use of treatments of the present invention under challenge conditions to prevent the onset of melanosis, scored as the percentage of prawns with melanosis above level 1.**

| | | Time | Set 1 | Set 2 | Set 3 |
|---|---|---|---|---|---|
| Control (Prior treatment) | Raw | 48h | 0% | 0% | 0% |
| | Cooked | 48h | 3% | 28% | 1% |
| Sodium metabisulphate | Raw | 48h | 0% | 0% | 0% |
| | Cooked | 48h | 0% | 0% | 0% |
| Example 1 Concentrate 2 | Raw | 48h | 0% | 0% | 0% |
| | Cooked | 48h | 0% | 0% | 0% |

Control: Prior treatment - a 4-Hexylresorcinol composition of PCT/GB2010/052182 at 1000x working concentration:
a. 5.5-6.9 wt% 4-hexylresorcinol,
b. 19.5-21.0 wt% monopropylene glycol,
c. 11.6-13.1 wt% citric acid monohydrate,
d. 1.9-3.2 wt% sodium chloride and;
e. Demineralised water (the remainder)

### Example 2 - Formulas Comprising 4-hexylresorcinol and 8-hydroxyquinoline

An assay was conducted to assess the ability of embodiments of the present invention to suitably prevent melanosis in a cooked prawn challenge defrost test, following prolonged freezing.

The following formulae were provided:
12. Example 2, Concentrate 12: 1.2% 4-Hexylresorcinol at 1000x working concentration
   a. 30 wt% Glycerine
   b. 10 wt% Monopropylene Glycol
   c. 1.2 wt% 4-hexylresorcinol
   d. 11.9 wt% Citric Acid
   e. 8.0 wt% Sodium Chloride
   f. 1.5 wt% Disodium EDTA
13. Example 2, Concentrate 13: 1.2% 4-Hexylresorcinol, 0.46% 8-Hydroxyquinoline at 1000x working concentration
   a. 10 wt% Glycerine
   b. 9.3 wt% Monopropylene Glycol
   c. 0.46 wt% 8-Hydroquinoline
   d. 1.2 wt% 4-hexylresorcinol
   e. 11.9 wt% Citric Acid
   f. 6.1 wt% Sodium Chloride
   g. 2.0 wt% Ascorbic Acid
   h. 1.5 wt% Disodium EDTA

Concentrates: 1. Control: No Treatment, 2. Control: Prior treatment - a 4-Hexylresorcinol composition of PCT/GB2010/052182, 12. 1.2% 4-Hexylresorcinol and 13. 1.2% 4-Hexylresorcinol, 0.46% 8-Hydroxyquinoline were diluted with water to their respective working concentrations to form solutions. Cooked prawns *(Penaeus vannamei*) were provided and treated with the various solutions for 5 minutes.

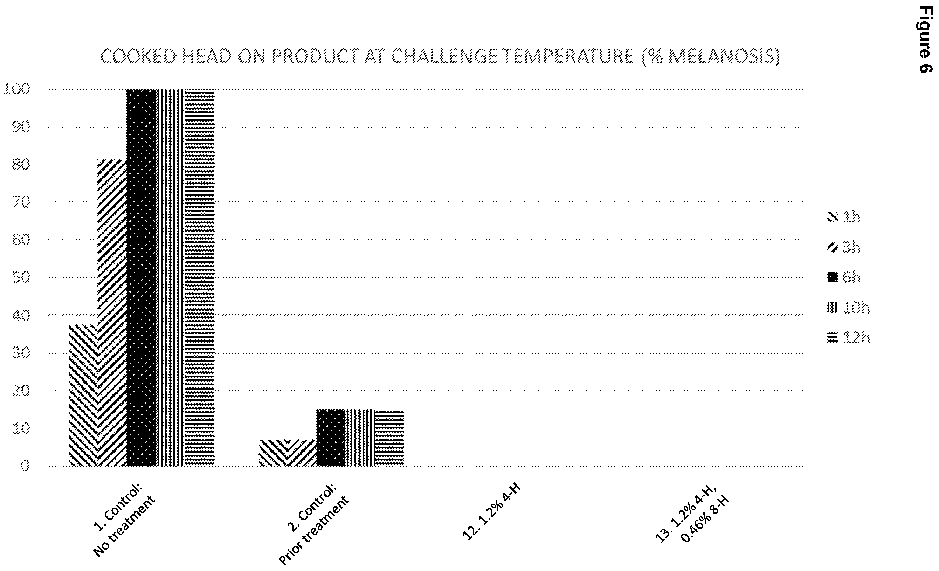

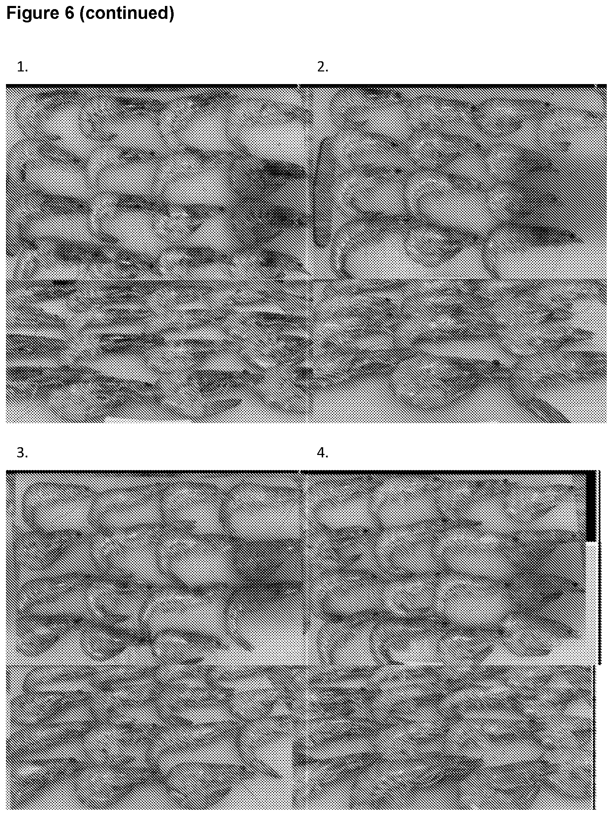

The prawns were then stored at -20 °C for 30 days before being thawed overnight at 4-5 °C. The prawns were then stored at challenge conditions (room temperature, approximately 15-20 °C, monitored at 0 h, 2 h, 5 h, 8 h, 11 h and 24 h). These were then scored according to the 1-8 gradations version of the "black spot progression scale" as shown in Figure 1. The results are shown in Table 3 and Figure 6.

**Table 3: Comparison of the use of concentrates of the present invention under challenge conditions to prevent the onset of melanosis, scored as the percentage of prawns with melanosis above level 1. 1. Control: No Treatment, 2. Control: Prior treatment - a 4-Hexylresorcinol composition of PCT/GB2010/052182, 12. 1.2% 4-Hexylresorcinol, 13. 1.2% 4-Hexylresorcinol, 0.46% 8-Hydroxyquinoline.**

| Condition | 1h | 3h | 6h | 10h | 12h |
|---|---|---|---|---|---|
| 1 | 37.5% | 81.25% | 100% | 100% | 100% |
| 2 | 7% | 7% | 15% | 15% | 15% |
| 12 | 0% | 0% | 0% | 0% | 0% |
| 13 | 0% | 0% | 0% | 0% | 0% |

This result clearly indicates that both a revised 4-hexylresorcinol formula and a formula that comprises both 4-hexylresorcinol and 8-Hydroxyquinoline are suitable for preventing melanosis in prawns and the like, even following both prolonged freezing (e.g. 30 days) and challenge protocols. As previously stated, both 4-hexylresorcinol and 8-Hydroxyquinoline are suitable alternatives to formulae which rely on sodium metabisulfite, therefore avoiding allergies.

### Example 3 - Raw Prawn Treatment

An assay was conducted to assess a dosage range of 8-Hydroxyquinoline to suitably prevent melanosis in a raw prawn defrost test.

The following concentrates were prepared:
1. Control: No treatment
   a. 100% water
2. Example 3, Concentrate 2: Control: Prior treatment - a 4-Hexylresorcinol composition of PCT/GB2010/052182 at 1000x working concentration:
   a. 5.5-6.9 wt% 4-hexylresorcinol,
   b. 19.5-21.0 wt% monopropylene glycol,
   c. 11.6-13.1 wt% citric acid monohydrate,
   d. 1.9-3.2 wt% sodium chloride and;
   e. Demineralised water (the remainder)
3. Example 3, Concentrate 3: Control: no ASC, no 8-Hydroxyquinoline at 1000x working concentration
   a. Monopropylene Glycol 40 wt%
   b. Demineralised Water 50.0 wt%
   c. Citric Acid 10 wt%
4. Example 3, Concentrate 4: Control: No 8-Hydroxyquinoline at 1000x working concentration
   a. Monopropylene Glycol 40 wt%
   b. Demineralised Water 48.0 wt%
   c. Ascorbic Acid 2 wt%
   d. Citric Acid 10 wt%
5. Example 3, Concentrate 5: 1.99% 8-Hydroxyquinoline at 1000x working concentration
   a. Monopropylene Glycol 40 wt%
   b. 8-Hydroxyquinoline 1.99 wt%
   c. Demineralised Water 46.1 wt%
   d. Ascorbic Acid 2 wt%
   e. Citric Acid 10 wt%
6. Example 3, Concentrate 6: 1.5% 8-Hydroxyquinoline at 1000x working concentration
   a. Monopropylene Glycol 40 wt%
   b. 8-Hydroxyquinoline 1.5 wt%
   c. Demineralised Water 46.5 wt%
   d. Ascorbic Acid 2 wt%
   e. Citric Acid 10 wt%
7. Example 3, Concentrate 7: 1% 8-Hydroxyquinoline at 1000x working concentration
   a. Monopropylene Glycol 40 wt%
   b. 8-Hydroxyquinoline 1.0 wt%
   c. Demineralised Water 47.0 wt%
   d. Ascorbic Acid 2 wt%
   e. Citric Acid 10 wt%
8. Example 3, Concentrate 8: 0.8% 8-Hydroxyquinoline at 1000x working concentration
   a. Monopropylene Glycol 40 wt%
   b. 8-Hydroxyquinoline 0.8 wt%
   c. Demineralised Water 47.2 wt%
   d. Ascorbic Acid 2 wt%
   e. Citric Acid 10 wt%
9. Example 3, Concentrate 9: 0.6% 8-Hydroxyquinoline at 1000x working concentration
   a. Monopropylene Glycol 40 wt%
   b. 8-Hydroxyquinoline 0.6 wt%
   c. Demineralised Water 47.4 wt%
   d. Ascorbic Acid 2 wt%
   e. Citric Acid 10 wt%
10. Example 3, Concentrate 10: 0.4% 8-Hydroxyquinoline at 1000x working concentration
   a. Monopropylene Glycol 40 wt%
   b. A 8-Hydroxyquinoline 0.4 wt%
   c. Demineralised Water 47.6 wt%
   d. Ascorbic Acid 2 wt%
   e. Citric Acid 10 wt%
11. Example 3, Concentrate 11: 0.2% 8-Hydroxyquinoline at 1000x working concentration
   a. Monopropylene Glycol 40 wt%
   b. 8-Hydroxyquinoline 0.2 wt%
   c. Demineralised Water 47.8 wt%
   d. Ascorbic Acid 2 wt%
   e. Citric Acid 10 wt%

Concentrates: 1. Control: No Treatment, 2. Control: Prior treatment - a 4-Hexylresorcinol composition of PCT/GB2010/052182, 3. Control: no ASC, no 8-Hydroxyquinoline, 4. Control: No 8-Hydroxyquinoline, 5. 1.99% 8-Hydroxyquinoline, 7. 1% 8-Hydroxyquinoline, 9. 0.6% 8-Hydroxyquinoline and 10. 0.4% 8-Hydroxyquinoline were then diluted with water to their respective working concentrations to form solutions. Raw prawns *(Penaeus vannamei*) were provided and treated with the various solutions for 5 minutes.

The prawns were then stored at -20 °C for 24 h before being thawed overnight at 4-5 °C. The prawns were stored in non-challenge conditions (4-5 °C, monitored at 0 days, 2 day, 2 days, 3 days, 4 days, 5 days, 6 days and 7 days), scoring the melanosis using a more finely gradated version of the "black spot progression scale" as shown in Figure 1. Instead of scoring on a scale of 1-5, the cooked prawns were scored on a scale of 1-8, however the end-points of both scales are the same. This was used to finely determine the rate of melanosis. For the 1-8 scale, a score of 5 or higher reflects prawns and the like considered objectionable by the United States Department of Commerce Seafood Inspection Manual (USDC 2011). All scores are determined by evaluating one side of each prawns and the like.

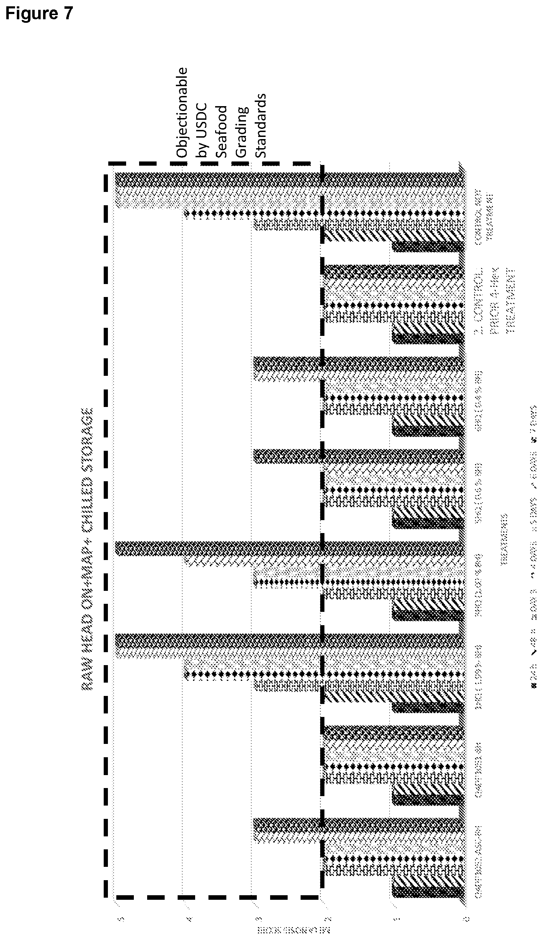

The results of this experiment are shown in Figure 7, which clearly shows that 1. Control: No Treatment starts to develop melanosis at 48-72 h, which indicates that MAP and total bacteria content may be an important factor in this processed shrimp. Conversely, 9. 0.6% 8-Hydroxyquinoline and 10. 0.4% 8-Hydroxyquinoline were able to control melanosis until day 7. As expected, 2. Control: Prior treatment - a 4-Hexylresorcinol composition of PCT/GB2010/052182 was capable of controlling melanosis for at least 7 days. Being able to prevent melanosis for 5-6 days would be considered commercially useful, so more than 7 days is exceptional. Importantly, conditions 5. 1.99% 8-Hydroxyquinoline and 7. 1% 8-Hydroxyquinoline showed an increase in the rate of onset of melanosis, which (without wishing to be bound by theory) is considered to be due to a proteolytic cascade that activates PPO. As such, it is considered that the anti-melanotic effect of 8-Hydroxyquinoline has an optimum concentration range.

### Example 4 - Cooked Prawn Treatment

An assay was conducted to assess a dosage range of 8-Hydroxyquinoline to suitably prevent melanosis in a cooked prawn defrost test.

Following a similar protocol as Example 3, concentrates 1. Control: No Treatment, 2. Control: Prior treatment - a 4-Hexylresorcinol composition of PCT/GB2010/052182, 5. 1.99% 8-Hydroxyquinoline, 6. 1.5% 8-Hydroxyquinoline, 7. 1% 8-Hydroxyquinoline, 8. 0.8% 8-Hydroxyquinoline, 9. 0.6% 8-Hydroxyquinoline and 10. 0.4% 8-Hydroxyquinoline were diluted with water to their respective working concentrations to form solutions. Cooked prawns *(Penaeus vannamei*) were provided and treated with the various solutions for 5 minutes.

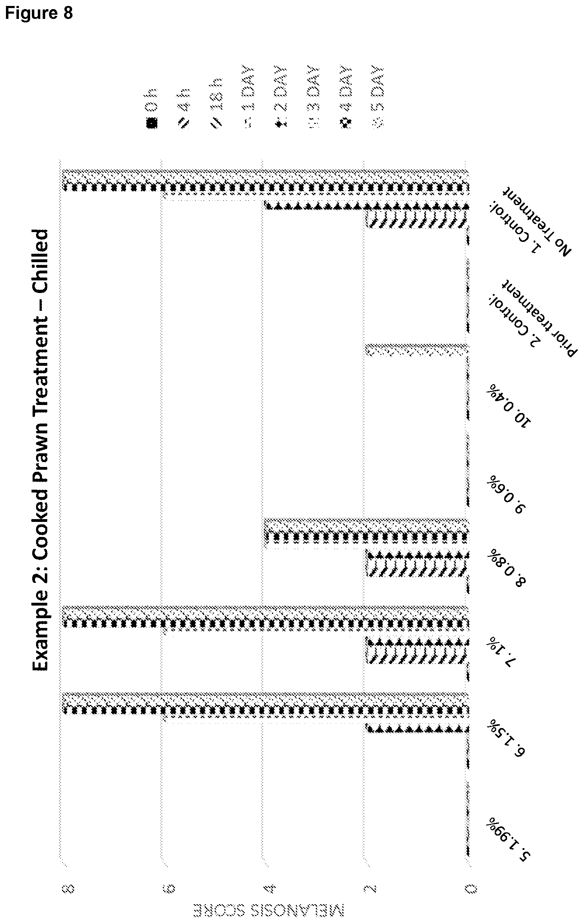

The prawns were then stored at -20 °C for 24 h before being thawed overnight at 4-5 °C. The prawns were then stored at non-challenge conditions (4-5 °C, monitored at 0 days, 2 day, 2 days, 3 days, 4 days and 5 days). These were then scored according to the "black spot progression scale" as shown in Figure 1. The results of the non-challenge conditions are shown in Figure 8.

This clearly shows that 1. Control: No Treatment starts to develop melanosis at 48-72 h. While no melanosis was observed for 5. 1.99% 8-Hydroxyquinoline, substantial whitening of the surface of the shrimp was observed, which would equally be commercially unsuitable.

Similarly to Example 3, conditions 6. 1.5% 8-Hydroxyquinoline and 7. 1% 8-Hydroxyquinoline, and to a lesser extent 8. 0.8% 8-Hydroxyquinoline developed melanosis, which is believed to be due to a proteolytic cascade.

Condition 9. 0.6% 8-Hydroxyquinoline successfully showed no melanosis during the experiment. However, 0-20% of the samples showed some surface whitening in the form of crystallisation. Besides condition 5 and 9, this whitening was not observed in any other formulas tested. Without wishing to be bound by theory, it is considered that the whitening is due to saturated complexes from 8-quinolinol.

Finally, condition 10. 0.4% 8-Hydroxyquinoline showed substantial delay in the onset of melanosis, with only some mild melanosis on day 5 of the experiment. This level of melanosis prevention would be considered commercially suitable. No crystallisation/whitening was observed under this condition.

As expected, 2. Control: Prior treatment - a 4-Hexylresorcinol composition of PCT/GB2010/052182 was capable of controlling melanosis for at least 5 days. As such, only Conditions 9. 0.6% 8-Hydroxyquinoline, 10. 0.4% 8-Hydroxyquinoline and condition 2. Control: Prior treatment - a 4-Hexylresorcinol composition of PCT/GB2010/052182 would be marketable after 5 days of chilled storage.

Examples 3 and 4 therefore indicate that 8-hydroxyquinoline has great potential for application as an antioxidant for preventing melanosis in shrimp and the like. Without wishing to be bound by theory, it is considered that this is mainly due its capacity to inhibit the radical reaction process and inactivate the activation of polyphenol oxidase (PPO). As such, it is considered that 0.6% and 0.4 % 8-Hydroquinoline in the formulation is effective and have potential to be used at commercial scale and as potential substitute for anti-melanotic formulas which comprise 4-hexylresorcinol.

### Example 5 - Further Long-Freeze, Challenge Defrost Testing On Raw and Cooked Prawns

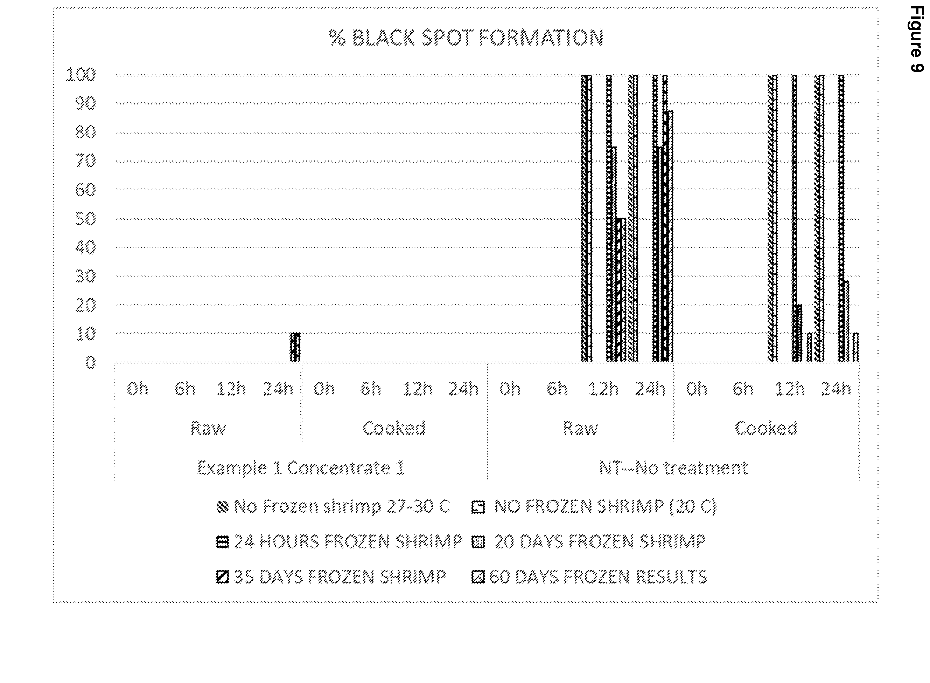

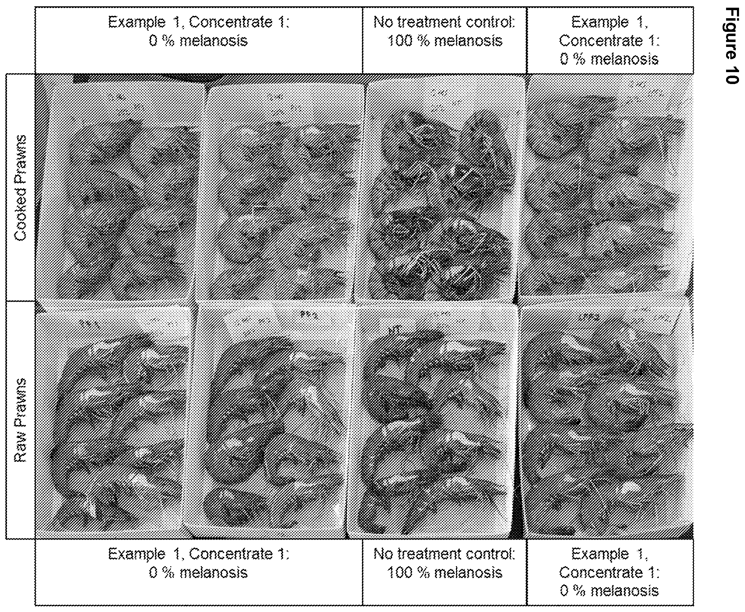

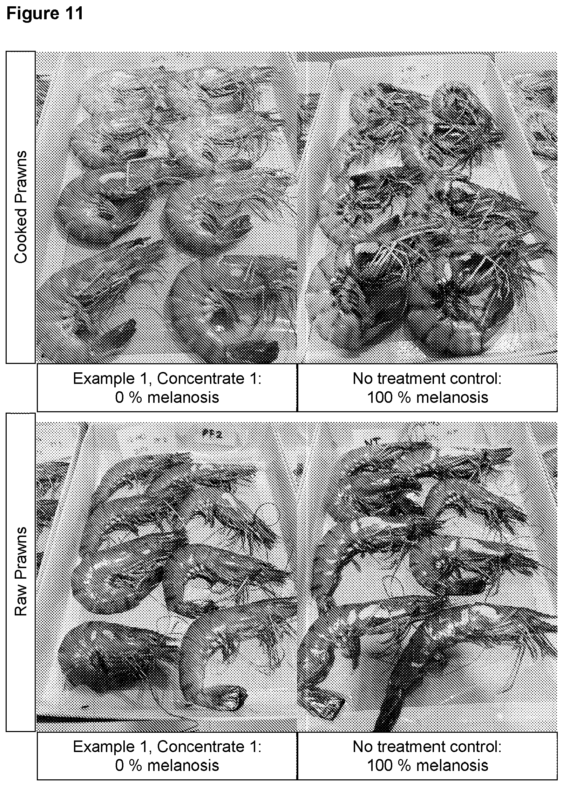

Further assays were performed with Example 1, Concentrate 1, using the method of Example 1 but with longer freeze times. The results of which are shown in Figures 9, 10 and 11.

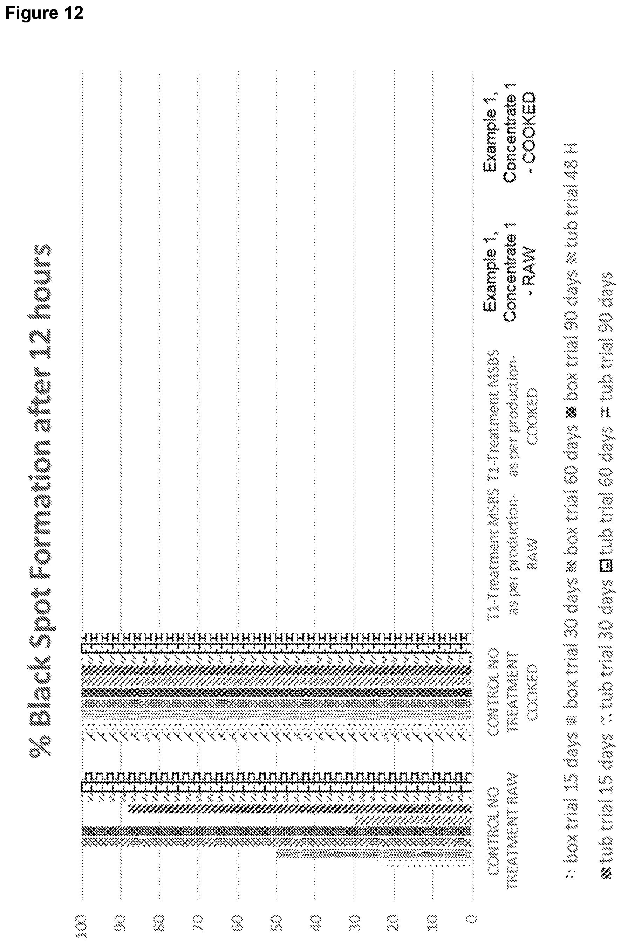

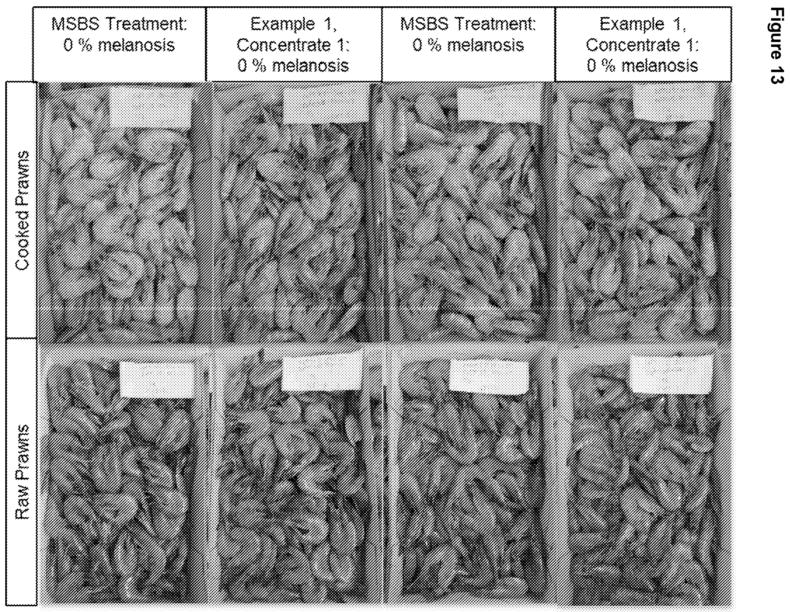

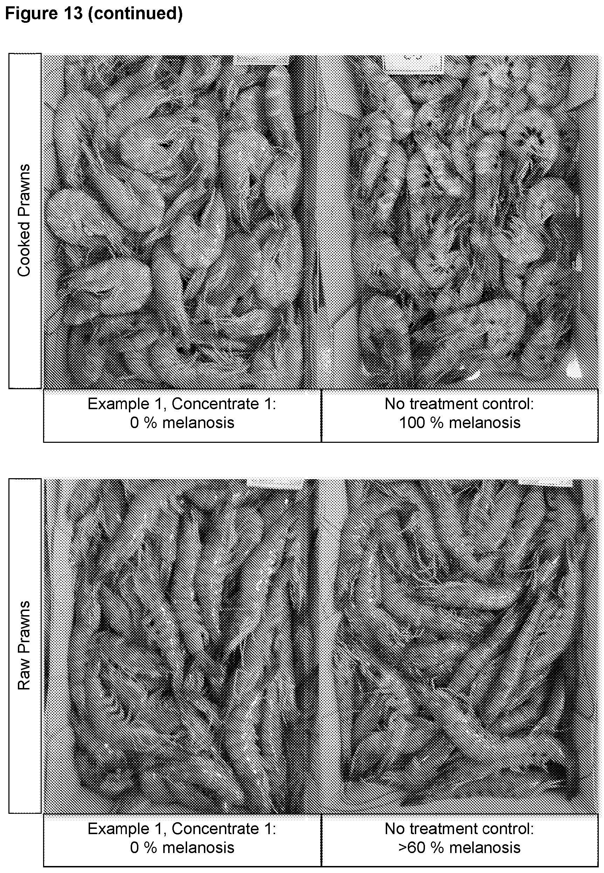

These assays were then performed again, with even longer freeze times - see Figures 12 and 13 and using an embodiment of Example 1, Concentrate 1 but wherein the concentrations of glycerine was increased to 40 wt %,
such that the concentrate provided was

Concentrate 1 at 1000x working concentration (40 wt % Glycerine):
a. 5 wt % 4-hexylresorcinol
b. 40 wt % Glycerine
c. 10 wt % Monopropylene glycol
d. 1.5 wt% Disodium EDTA
e. 11.9 wt % Citric acid
f. 8.0 wt% Sodium chloride
with remainder being water.

It was determined that using such a concentrate and resultant solution, with an increased amount of glycerine provided advantageous results to inhibit melanosis in particular environmental circumstances whilst not significantly impacting the stability of the solution.

These results clearly indicate that a revised 4-hexylresorcinol formula is suitable for preventing melanosis in prawns and the like, even following both prolonged freezing (e.g. 90 days) and challenge protocols. As previously stated, 4-hexylresorcinol is a suitable alternative to formulae which rely on sodium metabisulfite, therefore avoiding allergies, environmental and ecological damages.

Preferred compositions, features and embodiments of each aspect of the invention are as for each of the other aspects mutatis mutandis unless context demands otherwise.

Reference to cited material or information contained in the text should not be understood as a concession that the material or information was part of the common general knowledge or was known in any country.

## Claims

1. A solution for the inhibition of melanosis in crustaceans, wherein the solution comprises an effective amount of:
a. 4-hexylresorcinol
b. Glycerine
c. Monopropylene Glycol, and
d. EDTA or an acceptable salt or hydrate thereof.

2. The solution of claim 1 wherein the concentration of 4-hexylresorcinol is about 0.001-0.006 wt%, optionally either
a. wherein the concentration of 4-hexylresorcinol is about 0.003-0.006 wt%, or
b. wherein the concentration of 4-hexylresorcinol is about 0.005 wt%.

3. The solution of any one of claims 1-2 wherein the concentration of glycerine is about 0.01-0.04 wt%, optionally about 0.03 wt%.

4. The solution of any one of claims 1-3, wherein the concentration of monopropylene glycol is about 0.005-0.04 wt%, optionally about 0.01 wt%.

5. The solution of any one of claims 1-4 wherein the concentration of EDTA or an acceptable salt or hydrate thereof is about 0.001-0.002 wt%, optionally about 0.0015 wt%.

6. The solution of any one of claims 1-5 further comprising one or more of the following:
a. citric acid or an acceptable salt or hydrate thereof at a concentration of about 0.01-0.02 wt%, optionally about 0.0119 wt%.
b. ascorbic acid or an acceptable salt or hydrate thereof at a concentration of about 0.002 wt%.
c. sodium chloride at a concentration of about 0.006-0.01 wt%, optionally about 0.008 wt%.

7. A concentrate of the solution of any one of claims 1-6, wherein the concentrate is provided such that dilution with water provides the solution at a working concentration.

8. The concentrate of claim 7, wherein the concentrate is provided such that a dilution of between about 1:800-1:1000 v/v with water provides the solution at a working concentration, optionally wherein the concentrate comprises:
25 to 35 wt% Glycerine,
5 to 15 wt% Monopropylene Glycol,
1 to 7 wt% 4-hexylresorcinol, suitably 2 to 6 wt% 4-hexylresorcinol, suitably 2 to 5 wt% 4-hexylresorcinol
9 to 12 wt% Citric Acid,
1 to 2 wt% Disodium EDTA,
and further optionally 8.0 wt% Sodium Chloride,
with the remainder being water.

9. The concentrate of either of claims 7 or 8 wherein the concentrate is configured such that the dilution with water is:
a. Dilution with fresh water,
b. Dilution with a mixture of fresh water and salt water, or
c. Dilution with a mixture of fresh water and sea water with a sodium chloride concentration of about 3.1-3.8%.

10. A method of inhibiting melanosis in crustaceans, wherein the method comprises either:
a. Applying the solution of any one of claims 1-6 to the crustaceans, or;
b. Diluting a concentrate of any one of claims 7-9 with water to provide a solution of any one of claims 1-6, and applying the solution to the crustaceans.

11. The method of claim 10 wherein applying is for at least 5 minutes.

12. The method of either claim 10 or 11 wherein the crustaceans are cooked crustaceans or raw crustaceans.

13. The method of any one of claims 10-12 wherein the method further comprises freezing the crustaceans, optionally for prolonged freezing at approximately -20 °C at least 20 days before being thawed, optionally wherein the method further comprises defrosting the crustaceans, further optionally
wherein the defrosting is rapid defrosting.

14. The solution, concentrate or method of any one of the previous claims wherein the crustaceans are prawns, white shrimp (Litopenaeus vannamei), whiteleg shrimp (Penaeus vannamei) and other shrimp species, nephrops or crabs.

## Patentansprüche

1. Eine Lösung zur Hemmung von Melanose bei Krebstieren, wobei die Lösung eine wirksame Menge von Folgendem beinhaltet:
a. 4-Hexylresorcinol
b. Glycerin
c. Monopropylenglycol und
d. EDTA oder ein annehmbares Salz oder Hydrat davon.

2. Lösung gemäß Anspruch 1, wobei die Konzentration von 4-Hexylresorcinol etwa 0,001-0,006 Gew.-% beträgt, wahlweise entweder
a. wobei die Konzentration von 4-Hexylresorcinol etwa 0,003-0,006 Gew.-% beträgt, oder
b. wobei die Konzentration von 4-Hexylresorcinol etwa 0,005 Gew.-% beträgt.

3. Lösung gemäß einem der Ansprüche 1-2, wobei die Konzentration von Glycerin etwa 0,01-0,04 Gew.-%, wahlweise etwa 0,03 Gew.-%, beträgt.

4. Lösung gemäß einem der Ansprüche 1-3, wobei die Konzentration von Monopropylenglycol etwa 0,005-0,04 Gew.-%, wahlweise etwa 0,01 Gew.-%, beträgt.

5. Lösung gemäß einem der Ansprüche 1-4, wobei die Konzentration von EDTA oder einem annehmbaren Salz oder Hydrat davon etwa 0,001-0,002 Gew.-%, wahlweise etwa 0,0015 Gew.-%, beträgt.

6. Lösung gemäß einem der Ansprüche 1-5, die ferner eines oder mehrere der Folgenden beinhaltet:
a. Zitronensäure oder ein annehmbares Salz oder Hydrat davon in einer Konzentration von etwa 0,01-0,02 Gew.-%, wahlweise etwa 0,0119 Gew.-%.
b. Ascorbinsäure oder ein annehmbares Salz oder Hydrat davon in einer Konzentration von etwa 0,002 Gew.-%.
c. Natriumchlorid in einer Konzentration von etwa 0,006-0,01 Gew.-%, wahlweise etwa 0,008 Gew.-%.

7. Ein Konzentrat der Lösung gemäß einem der Ansprüche 1-6, wobei das Konzentrat so bereitgestellt wird, dass Verdünnung mit Wasser die Lösung in einer Arbeitskonzentration bereitstellt.

8. Konzentrat gemäß Anspruch 7, wobei das Konzentrat so bereitgestellt wird, dass eine Verdünnung von zwischen etwa 1 : 800-1 : 1000 v/v mit Wasser die Lösung in einer Arbeitskonzentration bereitstellt, wahlweise wobei das Konzentrat Folgendes beinhaltet:
25 bis 35 Gew.-% Glycerin,
5 bis 15 Gew.-% Monopropylenglycol,
1 bis 7 Gew.-% 4-Hexylresorcinol, geeigneterweise 2 bis 6 Gew.-% 4-Hexylresorcinol, geeigneterweise 2 bis 5 Gew.-% 4-Hexylresorcinol,
9 bis 12 Gew.-% Zitronensäure,
1 bis 2 Gew.-% Dinatrium-EDTA,
und ferner wahlweise 8,0 Gew.-% Natriumchlorid,
wobei der Rest Wasser ist.

9. Konzentrat gemäß einem der Ansprüche 7 oder 8, wobei das Konzentrat so konfiguriert ist, dass die Verdünnung mit Wasser wie folgt ist:
a. Verdünnung mit Frischwasser,
b. Verdünnung mit einem Gemisch aus Frischwasser und Salzwasser oder
c. Verdünnung mit einem Gemisch aus Frischwasser und Meerwasser mit einer Natriumchloridkonzentration von etwa 3,1-3,8 %.

10. Ein Verfahren zur Hemmung von Melanose bei Krebstieren, wobei das Verfahren eines der Folgenden beinhaltet:
a. Aufbringen der Lösung gemäß einem der Ansprüche 1-6 auf die Krebstiere oder
b. Verdünnen eines Konzentrats gemäß einem der Ansprüche 7-9 mit Wasser, um eine Lösung gemäß einem der Ansprüche 1-6 bereitzustellen, und Aufbringen der Lösung auf die Krebstiere.

11. Verfahren gemäß Anspruch 10, wobei das Aufbringen für mindestens 5 Minuten erfolgt.

12. Verfahren gemäß entweder Anspruch 10 oder 11, wobei die Krebstiere gekochte Krebstiere oder rohe Krebstiere sind.

13. Verfahren gemäß einem der Ansprüche 10-12, wobei das Verfahren ferner das Einfrieren der Krebstiere beinhaltet, wahlweise zum verlängerten Einfrieren bei etwa -20 °C mindestens 20 Tage vor dem Auftauen, wahlweise wobei das Verfahren ferner das Enteisen der Krebstiere beinhaltet, ferner wahlweise wobei das Enteisen ein schnelles Enteisen ist.

14. Lösung, Konzentrat oder Verfahren gemäß einem der vorhergehenden Ansprüche, wobei die Krebstiere Garnelen, weiße Garnelen (Litopenaeus vannamei), Weißbeingarnelen (Penaeus vannamei) und andere Garnelenarten, Nephrops oder Krabben sind.

## Revendications

1. Une solution pour l'inhibition de la mélanose chez les crustacés, la solution comprenant une quantité efficace de :
a. 4-hexylrésorcinol
b. Glycérine
c. Monopropylène Glycol, et
d. EDTA ou un sel ou hydrate acceptable de celui-ci.

2. La solution de la revendication 1 dans laquelle la concentration en 4-hexylrésorcinol est d'environ 0,001 à 0,006 % en poids, facultativement soit
a. dans laquelle la concentration en 4-hexylrésorcinol est d'environ 0,003 à 0,006 % en poids, soit
b. dans laquelle la concentration en 4-hexylrésorcinol est d'environ 0,005 % en poids.

3. La solution de l'une quelconque des revendications 1 à 2 dans laquelle la concentration en glycérine est d'environ 0,01 à 0,04 % en poids, facultativement d'environ 0,03 % en poids.

4. La solution de l'une quelconque des revendications 1 à 3 dans laquelle la concentration en monopropylène glycol est d'environ 0,005 à 0,04 % en poids, facultativement d'environ 0,01 % en poids.

5. La solution de l'une quelconque des revendications 1 à 4 dans laquelle la concentration en EDTA ou en un sel ou hydrate acceptable de celui-ci est d'environ 0,001 à 0,002 % en poids, facultativement d'environ 0,0015 % en poids.

6. La solution de l'une quelconque des revendications 1 à 5 comprenant en sus un ou plusieurs des suivants :
a. de l'acide citrique ou un sel ou hydrate acceptable de celui-ci à une concentration d'environ 0,01 à 0,02 % en poids, facultativement d'environ 0,0119 % en poids.
b. de l'acide ascorbique ou un sel ou hydrate acceptable de celui-ci à une concentration d'environ 0,002 % en poids.
c. du chlorure de sodium à une concentration d'environ 0,006 à 0,01 % en poids, facultativement d'environ 0,008 % en poids.

7. Un concentré de la solution de l'une quelconque des revendications 1 à 6, le concentré étant fourni de sorte qu'une dilution avec de l'eau fournisse la solution à une concentration de travail.

8. Le concentré de la revendication 7, le concentré étant fourni de sorte qu'une dilution entre environ 1:800 et 1:1000 v/v avec de l'eau fournisse la solution à une concentration de travail, le concentré comprenant facultativement : 25 à 35 % en poids de Glycérine,
5 à 15 % en poids de Monopropylène Glycol,
1 à 7 % en poids de 4-hexylrésorcinol, de manière appropriée 2 à 6 % en poids de 4-hexylrésorcinol, de manière appropriée 2 à 5 % en poids de 4-hexylrésorcinol,
9 à 12 % en poids d'Acide citrique,
1 à 2 % en poids d'EDTA disodique,
et en sus facultativement 8,0 % en poids de Chlorure de sodium,
le reste étant de l'eau.

9. Le concentré de l'une ou l'autre des revendications 7 et 8, le concentré étant configuré de sorte que la dilution avec de l'eau soit :
a. une dilution avec de l'eau douce,
b. une dilution avec un mélange d'eau douce et d'eau salée, ou
c. une dilution avec un mélange d'eau douce et d'eau de mer avec une concentration en chlorure de sodium d'environ 3,1 à 3,8 %.

10. Un procédé d'inhibition de la mélanose chez les crustacés, le procédé comprenant soit :
a. l'application de la solution de l'une quelconque des revendications 1 à 6 aux crustacés, soit ;
b. la dilution d'un concentré de l'une quelconque des revendications 7 à 9 avec de l'eau afin de fournir une solution de l'une quelconque des revendications 1 à 6, et l'application de la solution aux crustacés.

11. Le procédé de la revendication 10 dans lequel l'application dure au moins 5 minutes.

12. Le procédé de la revendication 10 ou de la revendication 11 dans lequel les crustacés sont des crustacés cuits ou des crustacés crus.

13. Le procédé de l'une quelconque des revendications 10 à 12, le procédé comprenant en sus la congélation des crustacés, facultativement pour une congélation prolongée à environ -20 °C au moins 20 jours avant qu'ils soient dégelés, le procédé comprenant facultativement en sus la décongélation des crustacés, en sus facultativement dans lequel la décongélation est une décongélation rapide.

14. La solution, le concentré ou le procédé de l'une quelconque des revendications précédentes dans lesquels les crustacés sont des crevettes roses, des crevettes blanches (Litopenaeus vannamei), des crevettes à pattes blanches (Penaeus vannamei) et d'autres espèces de crevettes, des langoustines ou des crabes.
